# EUROPEAN PATENT APPLICATION

(11) **EP 1 489 580 A2**
(43) Date of publication of application: **22.12.2004**
(21) Application number: 04014184.8
(22) Date of filing: 17.06.2004
(51) Int. Cl.: G09B 5/08, G09B 5/00

(54) **Multimedia training system and method**

(30) Priority: 18.06.2003 US 479636 P
(71) Applicant: Oxyheal Health Group, National City, CA 91950 (US)
(72) Inventor: Gurnee, William T., La Jolla, CA 92038 (US); Corson, Kevin, Burbank, CA 91506 (US)
(74) Representative: Fiener, Josef

(57) **Abstract**

Systems and methods for use in multimedia training are disclosed. The system includes a server having data files adapted be accessed by one or more terminals, and a terminal adapted to communicate with the server. The terminal has a processor adapted to control execution of a training program. The execution includes accessing at least one of the data files on the server.

## Description

This application is related to U.S. Provisional Patent Application No. 60/479,636, filed June 18, 2003, from which priority is claimed, and which is hereby incorporated by reference in its entirety including all tables, figures and claims.

### FIELD OF THE INVENTION

The invention relates, in general, to educational and training systems and methods. More particularly, the invention provides a multimedia training system and method for interactive and automated training which may be conducted either locally or remotely.

### BRIEF DESCRIPTION OF THE DRAWINGS

In the following, the invention will be explained in detail with reference to the drawings, in which:
Figure 1 illustrates a screen shot of an introductory page for a multimedia training system according to an embodiment of the present invention;
Figure 2 is a schematic illustration of an embodiment of the multimedia training system;
Figure 3 illustrates a computer system on which embodiments of the invention may be implemented;
Figure 4 diagrammatically illustrates the interaction between a user computer and a test server in an arrangement according to an embodiment of the invention; and
Figure 5 illustrates a screen shot of an exemplary page of the multimedia training system.

### DESCRIPTION OF CERTAIN EMBODIMENTS OF THE INVENTION

The disclosed embodiments of the present invention provide a training system and method for training and education of students or professionals in a variety of fields, such as healthcare. In particular, the systems and methods of the present invention allow the students and professionals to receive training in an interactive and automated environment, either locally or remotely.

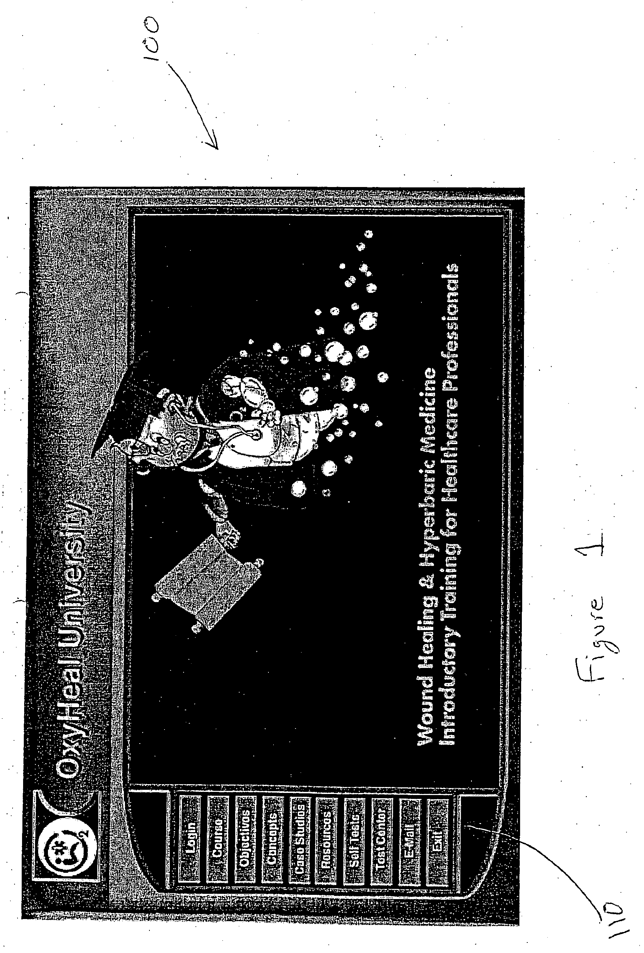

Figure 1 illustrates a screen shot of an introductory page for a multimedia training system according to an embodiment of the present invention. The illustrated training system is designed to provide training to healthcare professionals in the treatment of wounds using hyperbaric medicine, as may be provided using pressure chambers. Similar systems may be used to provide training for professionals in other fields as well. The screen 100 may be displayed on a monitor of terminal such as a user's computer, such as a desktop or a laptop, for example. The user's computer may have access to a network such as the Internet or an extranet and may be adapted to operate as a stand-alone device. The introductory screen 100 welcomes the user to the system, and offers options that may be selected using one of a set of buttons 110 displayed on the screen 100. The buttons 110 allow a user to select options such as logging onto the system, obtaining information about a course, starting or resuming the course, etc.

The introductory page may be displayed by software residing on the user's computer and being executed by the processor on the user's computer. In this regard, execution of the control and related communication is controlled by software residing on the user's computer.

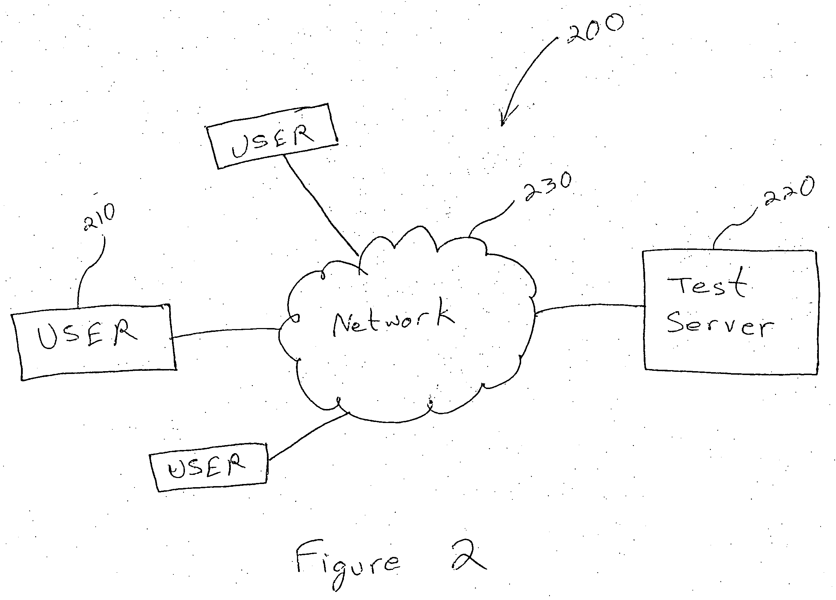

Figure 2 is a schematic illustration of an embodiment of the multimedia training system. The system 200 includes one or more user computers, such as user computer 210, on which users, such as students or professionals, can use the training system.

As part of the training, the user computer 210 may communicate with a test server 220. The test server 220 may be located either locally relative to the user computer 210 or remotely. For local use, the user computer 210 and the test server 220 may be linked through a cable or set of cables and may be located in the same room or different rooms within the same building, for example. For remote use, the user computer 210 and the test server 220 may be located in any locations, such as different cities, states or countries, for example. In this case, the user computer 210 and the test server 220 may communicate through a variety of networks 230. For example, the user computer 210 and the test server 220 may be connected through the public switched telephone network (PSTN). In a particular embodiment, the user computer 210 and the test server 220 communicate through a computer network, such as a public network like the Internet. The test server 220 may be adapted to accommodate any practical number of users accessing the server 220.

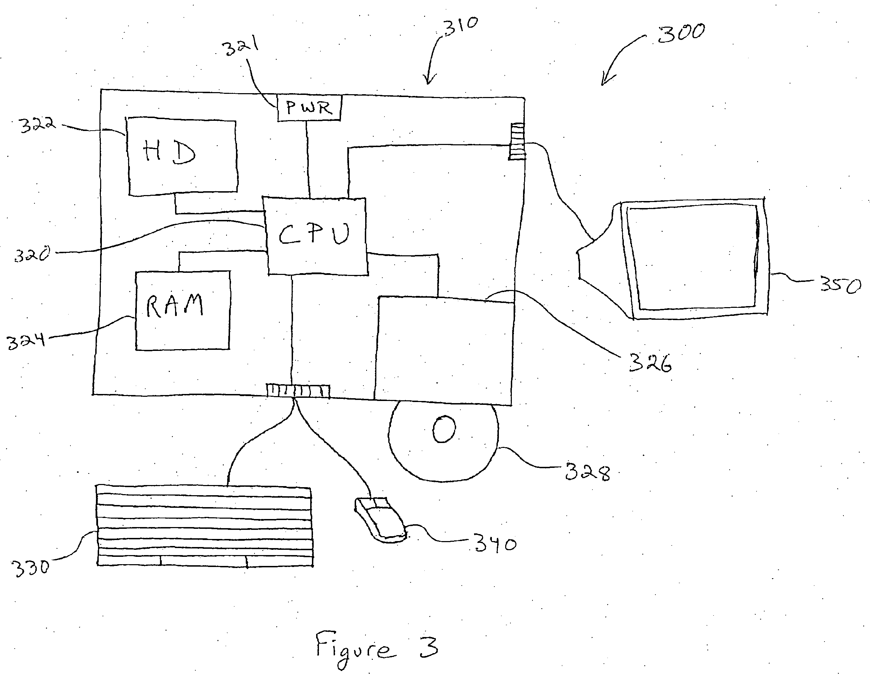

Figure 3 illustrates a computer system on which embodiments of the invention may be implemented. The illustrated computer system 300 may be used as the user computer 210 (Figure 2). The computer system 300 comprises a computer such as a desktop unit 310 or a laptop. Processing is performed by a central processor unit (CPU) 320.

The CPU 320 may receive electrical power from a power supply 321 connected to an external power source.

A hard drive 322 may be provided to store data and instructions in a non-volatile memory, for example. Further, a random access memory 324 is provided to temporarily store instructions for the CPU. The random access memory 324 may be provided with stored instructions by, for example, an executable residing on the hard drive 322 or on an external storage medium such as a floppy disk or a CD-ROM 328. Information on the CD-ROM 328 may be accessed by the CPU 320 via a CD-ROM drive 326. Other drives may be provided to access information from other types of external storage media.

The CPU 320 may receive instructions, commands or data from an external user through input devices such as a keyboard 330 and a mouse 340. The CPU 320 may display status, results or other information to the user on a monitor 350.

The test server 220 may be similarly configured, but may include additional software to provide the server functionality. For example, server software, such as Apache, may be implemented.

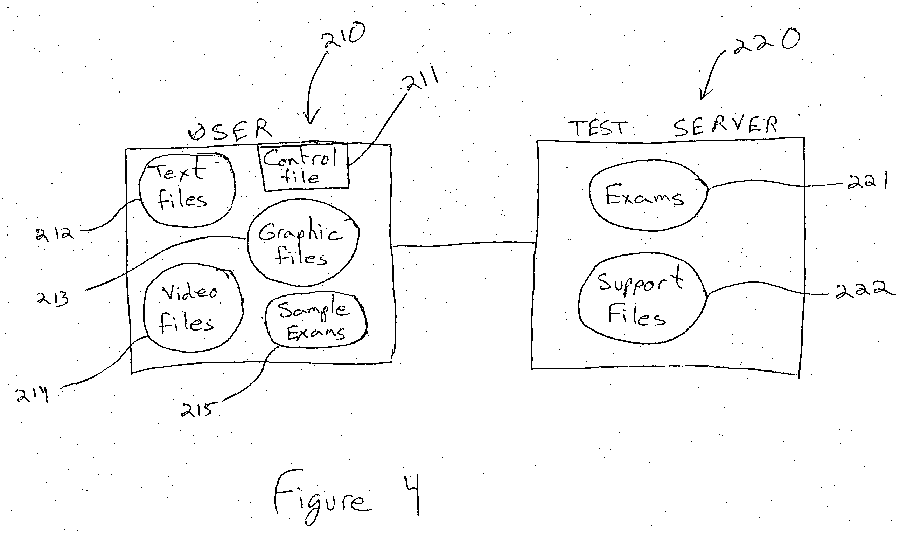

Figure 4 diagrammatically illustrates the interaction between a user computer and a test server in an arrangement according to an embodiment of the invention. Information relating to the training program is divided among the user computer 210 and the test server 220. In this manner, a training administrator may allow the user to obtain certain aspects of the training on a stand-alone computer, while maintaining control over other aspects such as official exams and exam scores. Although the illustrated embodiment includes one exemplary division of information, those skilled in the art will understand that other arrangements may divide the information in a different manner.

In the illustrated embodiment of Figure 4, a control file 211 is provided on the user computer 210. The control file 211 is an executable program which controls and manages the execution of the training system. The control file 211 can be executed by the user and automatically accesses other files as necessary. The control file 211 may include executable software for code written in any of a number of programming languages.

The user computer 210 also includes a set of text files 212, graphic files 213, video files 214 and sample exam files 215. Each of these files 212-215 allow the user to obtain aspects of training without connecting to the test server 220. Additionally, these files 212-215 may be accessed when the user computer 210 communicates with the test server 220.

The text files 212 may include sections of training material, such as various chapters of a training manual. Each chapter or a section of a chapter may be provided in a separate file to reduce the resources required from the user computer 210. The text files may be made available in a variety of formats, including formats readable by text editors such as Microsoft Word.

The graphic files 213 may include presentation charts to accompany the text files 212. The graphic files 213 may be formatted to be read by programs such as Microsoft PowerPoint. The graphic files 213 may include slides which summarize one or more sections of a chapter, for example.

The video files 214 provide the ability to present demonstrations to the user. For example, video files 214 may be used to demonstrate the actual use of a hyperbaric chamber including proper latching of the doors. Additionally, video files 214 may be used to demonstrate scientific principles such as the relationship between pressure and volume.

Sample exam files 215 are provided on the user computer 210 to allow self-examination by the user. Such self-examination may be useful for training purposes, but is generally insufficient for certification of the user, for example. Thus, in the preferred embodiment, the sample exam files 215 are not used as official exams for certification of the student or professional. Rather, as described below, official exams are administered through the test server 220.

All files 211-215 on the user computer 210 may be located either on a hard drive, a floppy disk, a CD-ROM or other storage devices. In the preferred embodiment, a CD-ROM containing all the files is provided to the user.

In the embodiment illustrated in Figure 4, the test server 220 is provided with additional files. Exam files 221 are provided on the test server 220 to allow the user to attempt to obtain certification. In this regard, the exam files 221 include official exams, with results being controlled and maintained by the test server 220.

The test server 221 also includes support files 222. The support files 222 may include information which allows and restricts access to the test server. For example, identification and password information may be included in the support files 222 to restrict access to registered students and professionals.

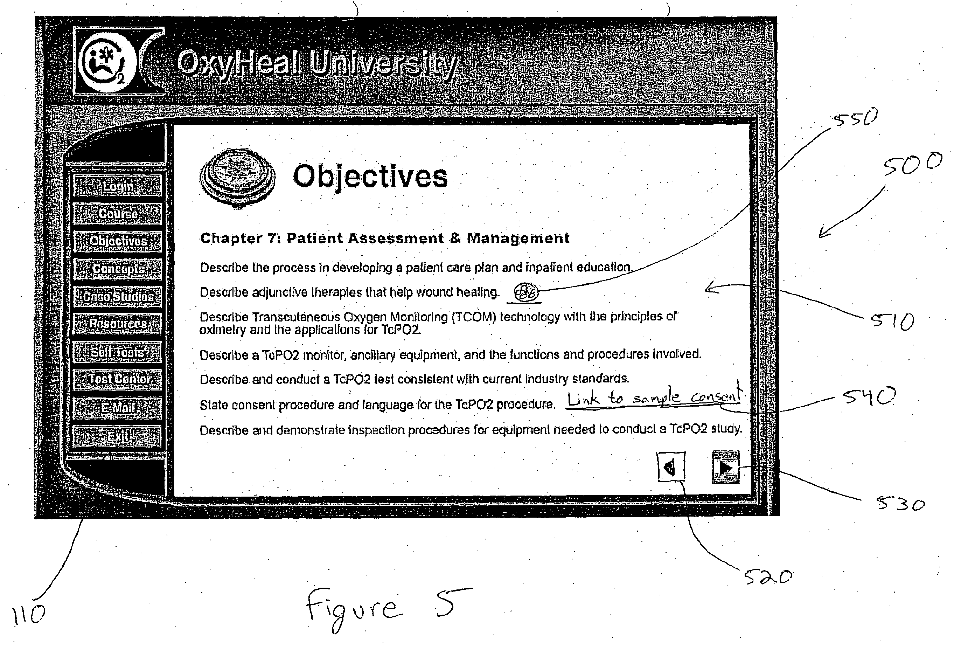

Figure 5 illustrates a screen shot of an exemplary page of the multimedia training system. Once a user accesses the course materials using one of the buttons 110, the control file 211 (Figure 4) controls the sequence of files accessed for display to the user. As a first instance, the control file 211 may display information from the first slide of a presentation summarizing the first chapter. In the illustrated example, the page 500 displays a slide 510 of a presentation summarizing "Chapter 7: Patient Assessment & Management." In addition to the slide 510, the page 500 includes buttons 520, 530 to allow the user to either step back or proceed to another page of the training course. If the user clicks on the forward button 530, the control file 211 may access and display another page such as the next slide in the presentation, a text file, another graphic file or a video file, for example. Additionally, the page 500 may include links, such as link 540, which allow the user to view supplemental information. In the illustrated example, a link 540 is provided to allow the user to view a sample consent form. Links to supplemental information in the form of video files may also be provided, as illustrated by the icon 550 providing a link to a video file demonstrating various therapies, for example.

At the user's direction, the control file 211 may initiate a connection to the test server 220. The user may elect to do this when he or she feels adequately prepared to take an official exam. Once connected to the test server 220, the user may receive questions from the test server 220 and have the questions displayed on the monitor of the user's computer 210. Answers to the questions can then be transmitted from the user's computer 210 to the test server 220. The answers are received by the test server 220, where they are stored and checked for accuracy. A final score may be calculated by the test server 220 using one of the support files 222, for example.

Thus, an interactive multimedia training system and method is provided which allows operation in a stand-alone or networked manner. The training may be conducted locally or remotely.

While particular embodiments of the present invention have been disclosed, it is to be understood that various different modifications and combinations are possible and are contemplated within the true spirit and scope of the appended claims. There is no intention, therefore, of limitations to the exact abstract or disclosure herein presented.

## Claims

1. A multimedia training system, comprising:
a server having data files adapted be accessed by one or more terminals;
a terminal adapted to communicate with said server, said terminal having a processor adapted to control execution of a training program, said execution including accessing at least one of said data files on said server.

2. The system of claim 1, wherein each of said server is adapted to be accessed by one or more terminals through a computer network.

3. The system of claim 2, wherein the computer network is the Internet.

4. The system of claim 1, wherein the data files on the server include exams to be administered by the training program.

5. The system of claim 4, wherein the data files on the server include support files for administration of the exams.

6. The system of claim 1, wherein the terminal includes educational support files for said training program.

7. The system of claim 6, wherein the educational support files include files containing multimedia data.

8. A multimedia training terminal, comprising:
a processor adapted to execute a training program;
a communication device adapted to access a server having data files associated with said training program;
wherein said processor is adapted to control execution of the training program and communication with the server.

9. The terminal of claim 8, wherein said communication device is adapted to access said server through a computer network.

10. The terminal of claim 9, wherein the computer network is the Internet.

11. The terminal of claim 8, wherein the data files on the server include exams to be administered by the training program.

12. The terminal of claim 11, wherein the data files on the server include support files for administration of the exams.

13. The terminal of claim 8, further comprising a storage device having educational support files for said training program.

14. The terminal of claim 13, wherein the educational support files include files containing multimedia data.

15. A method of conducting a multimedia training program, comprising:
executing a training program on a user terminal;
communicating with a server having data files associated with the training program; and
accessing at least one of said data files for use by said training program.

16. A program product for conducting a multimedia training program, comprising machine-readable program code for causing, when executed, one or more machines to perform the following method steps:
executing a training program on a user terminal;
communicating with a server having data files associated with the training program; and
accessing at least one of said data files for use by said training program.
